# EUROPÄISCHE PATENTSCHRIFT

(11) **EP 1 404 956 B1**
(45) Veröffentlichungstag und Bekanntmachung des Hinweises auf die Patenterteilung: **20.08.2008**
(21) Anmeldenummer: 02745127.7
(22) Anmeldetag: 07.06.2002
(51) Int. Cl.: F02D 9/10, F16K 1/22, F16K 31/53

(54) **ELEKTROMOTORISCHER ANTRIEB MIT EINER SCHNECKE**
ELECTROMOTIVE DRIVE COMPRISING A WORM
MECANISME DE COMMANDE A MOTEUR ELECTRIQUE, MUNI D'UNE VIS SANS FIN

(30) Priorität: 11.07.2001 DE 10133630
(43) Veröffentlichungstag der Anmeldung: 07.04.2004
(73) Patentinhaber: Continental Automotive GmbH, 30165 Hannover (DE)
(72) Erfinder: RENNEN, Michael, 65812 Bad Soden (DE); MANN, Thomas, 61130 Nidderau (DE)
(86) Internationale Anmeldenummer: PCT/DE2002/002084
(87) Internationale Veröffentlichungsnummer: WO 2003/006804

(56) Entgegenhaltungen:
- EP-A- 1 101 919
- DE-A- 19 855 613
- RU-C- 2 009 365
- US-A- 4 533 114

## Beschreibung

Die Erfindung bezieht sich auf einen elektromotorischen Antrieb mit einem Elektromotor, dessen Antriebsritzel mit einem Zahnrad eine erste Getriebestufe bildend kämmt, mit einer von der Abtriebswelle des Zahnrads fest verbundenen Schnecke, durch die ein Schneckenrad antreibbar ist, wobei Schnecke und Schneckenrad eine zweite Getriebestufe und die Welle des Schneckenrads die Abtriebswelle des elektromotorischen Antriebs bilden und wobei die Abtriebswelle des elektromotorischen Antriebs zwischen einer Anfangstellung und einer Endstellung verdrehbar antreibbar ist, wobei die Abtriebswelle des Zahnrads bei unbestromtem Elektromotor von einer Rückstellfeder in Drehrichtung zur Anfangsstellung drehbar antreibbar ist.

Derartige elektromotorische Antriebe werden für die unterschiedlichsten Zwecke angewandt und haben den Vorteil einer kompakten Bauweise bei nur relativ geringen erforderlichen Antriebskräften. Für Anwendungsfälle, in denen bei Ausfall des Antriebs durch den Elektromotor sicherheitshalber die Anfangsstellung eingenommen werden muß, ist diese Einnahme der Anfangsstellung sicher zu stellen.

Aus der EP 1 101 919 ist ein elektromotorischer Antrieb mit den Merkmalen des Oberbegriffs des Anspruchs 1 bekannt.

Aus der US 4 533 114 ist ein Stellantrieb mit einem Handrad für ein Drehventil bekannt, bei dem eine Spiralfeder als Rückstellfeder bekannt ist, die in einem Federhaus angeordnet ist.

Aufgabe der Erfindung ist es daher einen elektromotorischen Antrieb der eingangs genannten Art zu schaffen, der bei geringer, kompakter Baugröße im Falle eines Ausfalls des Elektromotors selbsttätig seine Anfangsstellung einnimmt.

Diese Aufgabe wird erfindungsgemäß dadurch gelöst, daß die zweite Getriebestufe eine nichtselbsthemmende Getriebestufe ist.

Die nicht selbsthemmende Ausbildung der zweiten Getriebestufe ermöglicht deren freie Bewegbarkeit in beide Drehrichtungen. Die Verwendung von Schnecke und Schneckenrad als zweite Getriebestufe ermöglicht bereits ein geringes Bauraumerfordernis.

Die Anordnung der Rückstellfeder zwischen den beiden Getriebestufen ermöglicht es weiterhin die Kraft der Rückstellfeder sehr gering auszulegen und damit die Größe der Rückstellfeder und deren Bauraumerfordernis ebenfalls zu minimieren. Das aufzubringende Drehmoment der Rückstellfeder wird durch die Übersetzung, die Reibmomente und die externe Last bestimmt.

Eine Reduzierung der Reibmomente ergibt sich dadurch, daß die Rückstellfeder treibend auf die Schnecke einwirkt, ein erheblich geringerer Widerstand in der zweiten Getriebestufe durch die Rückstellfeder zu überwinden ist, als wenn die Rückstellfeder über die Abtriebswelle des elektromotorischen Antriebs und das Schneckenrad eine Rückstellung durchführen müßte.

Weiterhin wird eine an der Abtriebswelle des elektromotorischen Antriebs anliegende Last durch die zweite Getriebestufe entsprechend deren Übersetzung reduziert, wodurch ebenfalls die von der Rückstellfeder aufzubringende Rückstellkraft reduziert wird.

Ist die erste Getriebestufe ein Stirnradgetriebe, so ergibt sich zwischen den beiden Zahnrädern des Stirnradgetriebes ein günstiges Hebelverhältnis, was ebenfalls zu einer Reduzierung der von der Rückstellfeder aufzubringenden Kräfte führt. Darüber hinaus kann aufgrund des günstigen Übersetzungsverhältnisses des Stirnradgetriebes für den Normalbetrieb ein Elektromotor hoher Drehzahl verwendet werden.

Die Rückstellfeder kann eine Wendelfeder sein.

Ist die Rückstellfeder aber eine Spiralfeder, so wird der erforderliche Bauraum gering gehalten.

Besonders vorteilhaft ist es, wenn die Spiralfeder eine in einem Federhaus mit Öffnungsspannung angeordnete Triebfeder ist. Bei einer derartigen Triebfeder erfolgt über den Weg des Spannens nur ein relativ geringer Anstieg der Federkraft, wodurch ein Zurückstellen des elektromotorischen Antriebs bei unbestromtem Elektromotor in die Anfangsstellung des elektromotorischen Antriebs sichergestellt ist. Ein stärkerer Elektromotor, der im Normalbetrieb beim Bewegen des elektromotorischen Antriebs in seine Endstellung durch Spannen einer Rückstellfeder einen zusätzlichen Anstieg der Kraft der Rückstellfeder überwinden muß, ist nicht erforderlich. Damit kann die Größe des Elektromotors ebenfalls gering gehalten werden.

Umschließt die Rückstellfeder die Abtriebswelle des Zahnrads, so ergibt sich ein geringes Bauraumerfordernis für die Rückstellfeder.

Vorzugsweise ist die Abtriebswelle des Zahnrads von der Rückstellfeder um eine Mehrzahl an Umdrehungen rückstellbar.

Wenn sich die Drehachsen des Antriebsritzels des Elektromotors und der Schnecke axial zueinander erstrecken, insbesondere wenn die Drehachsen des Antriebsritzels des Elektromotors und der Schnecke parallel zueinander verlaufen, kann eine sehr kompakte Anordnung des elektromotorischen Antriebs und damit ein sehr geringes Bauraumerfordernis erreicht werden.

Der elektromotorische Antrieb kann mit Vorteil bei allen Arten von Klappen im Motorraum eines Kraftfahrzeugs angewandt werden. Vorzugsweise ist die Welle des Schneckenrads eine Drosselklappenwelle eines Drosselklappenstutzens für einen Verbrennungsmotor oder kann eine derartige Drosselklappenwelle antreiben. Bei einer derartigen Anwendung ist sichergestellt, daß im Falle eines ungestromten Elektromotors die Drosselklappe nicht in einer undefinierten Öffnungsstellung stehen bleibt, sondern in ihre Leerlaufstellung zurückgeführt wird.

Der Elektromotor kann ein Gleichstrommotor sein.

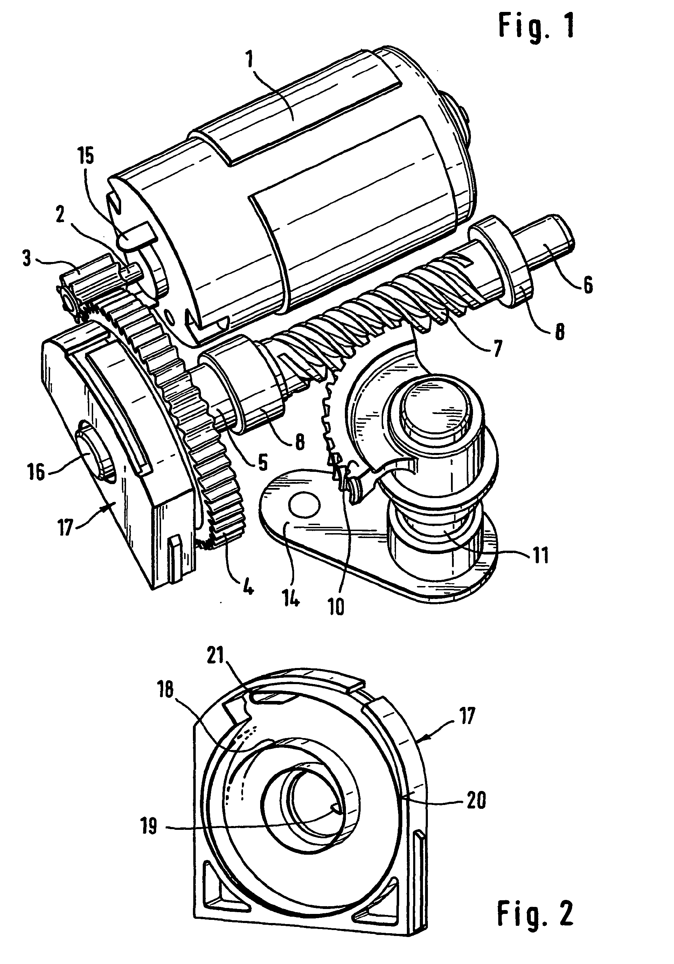

Ein Ausführungsbeispiel der Erfindung ist in der Zeichnung dargestellt und wird im folgenden näher beschrieben. Es zeigen
Figur 1 eine perspektivische Ansicht eines elektromotorischen Antriebs
Figur 2 eine perspektivische Ansicht eines Federhauses mit einer Rückstellfeder des elektromotorischen Antriebs nach Figur 1

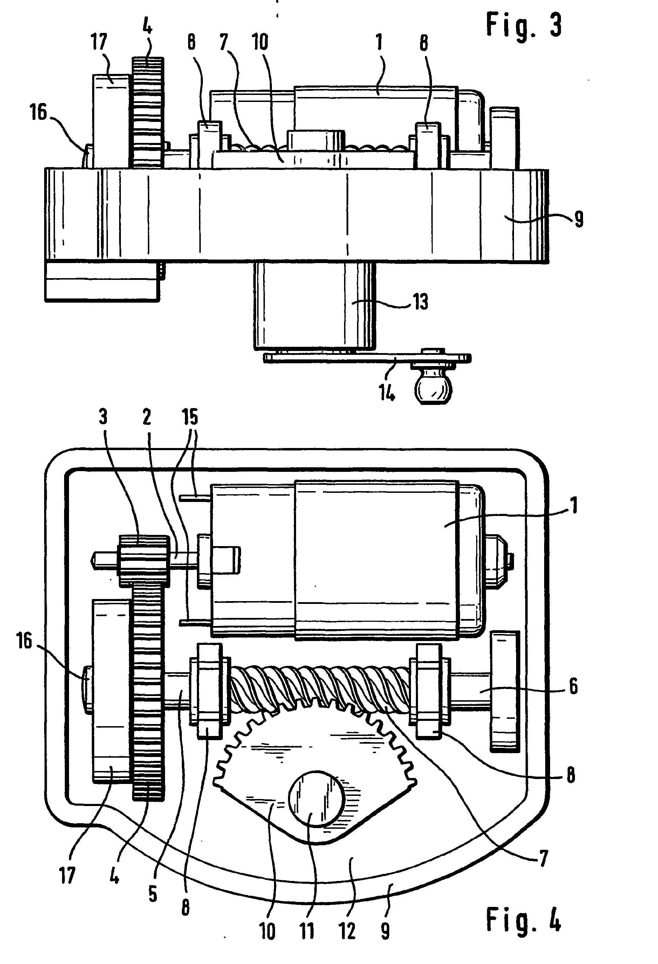

Figur 3 eine Seitenansicht des in eine Gehäusehälfte eingebauten elektromotorischen Antriebs nach Figur 1
Figur 4 eine Draufsicht des in eine Gehäusehälfte eingebauten elektromotorischen Antriebs nach Figur 3.

Der in den Figuren dargestellte elektromotorische Antrieb besitzt einen Gleichstromelektromotor 1, der axial gerichtete Anschlußkontakte 15 aufweist.

Das auf der Motorwelle 2 des Gleichstromelektromotors 1 angeordnete Antriebsritzel 3 geringer Zähnezahl kämmt ein Stirnradgetriebe und eine erste Getriebestufe des elektromotorischen Antriebs bildend mit einem Zahnrad 4 großer Zähnzahl. Die Abtriebswelle 5 des Zahnrads 4 ist koaxial fest mit der Welle 6 einer Schnecke 7 verbunden, wobei die Welle 6 der Schnecke 7 und mit ihr die Abtriebswelle 5 über zwei in einer Gehäuseschale 9 angeordnete Lager 8 drehbar gelagert ist.

Durch die Schnecke 7 ist ein als Zahnsegment ausgebildetes Schneckenrad 10 drehbar antreibbar, wobei Schnecke 7 und Schneckenrad 10 ein zweite Getriebestufe bilden, die eine nicht selbsthemmende Getriebestufe ist. Die in der Gehäuseschale 9 drehbar gelagerte Abtriebswelle 11 des Schneckenrads 10 ist durch eine Öffnung im Boden 12 der Gehäuseschale 9 und einen an der Gehäuseschale 9 befestigten Lagerstutzen 13 aus der Gehäuseschale 9 nach außen geführt und trägt an ihrem freien Ende einen radial hervorstehenden Betätigungshebel 14, der auf eine nicht dargestellte, von dem elektromotorischen Antrieb zu betätigende Einheit einwirken kann.

Schrittmotor 1 mit Motorwelle 2 und Antriebsritzel 3 sind parallel neben der Schnecke 7 und dem Zahnrad 4 angeordnet, so daß der elektromechanische Antrieb kompakt ohne hervorstehende Elemente ausgebildet ist und die dafür erforderliche Gehäuseschale 9 ebenfalls einen kleinen, kompakten Aufbau hat. Diese Gehäuseschale 9 ist durch eine nicht dargestellte zweite, etwa gleiche Gehäuseschale zu einem den elektrischen Antrieb vollständig aufnehmenden Gehäuse ergänzbar.

Die Abtriebswelle 5 des Zahnrads 4 besitzt einen an der der Schnecke 7 abgewandten Seite des Zahnrads 4 hervorstehenden Wellenzapfen 16, der etwa zentrisch in ein mit der Gehäuseschale 9 fest verbundenes Federhaus 17 hineinragt. Den Wellenzapfen 16 umschließend ist in dem Federhaus eine Spiralfeder mit mehreren Windungen angeordnet, die eine Triebfeder 18 ist und mit ihrem inneren Ende 19 mit dem Wellenzapfen 16 und mit ihrem äußeren Ende 21 mit dem Federhaus 17 fest verbunden ist. Die als Blattfeder ausgebildete Triebfeder 18 ist mit Öffnungsspannung in dem Federhaus 17 angeordnet, was bedeutet, daß sie im Zustand der Anfangsstellung des elektromotorischen Antriebs mit ihren Windungen auf Block radial nach außen an der sie umschließenden Wand 20 des Federhauses 17 anliegt.

Bei Antrieb des elektromotorischen Antriebs aus seiner Anfangsstellung in Richtung seiner Endstellung erfolgt Windung für Windung von innen her ein Spannen der Triebfeder 18 radial nach innen. Dabei steigt die Federkraft über den Federweg nur gering an, so daß vom Schrittmotor 1 neben der für die zu betätigende Einheit und die Widerstände des elektromotorischen Antriebs erforderlichen Kraft der weitere Kraftaufwand sich über den Verstellweg nicht wesentlich ändert.

## Patentansprüche

1. Elektromotorischer Antrieb mit einem Elektromotor, dessen Antriebsritzel mit einem Zahnrad eine erste Getriebestufe bildend kämmt, mit einer von der Abtriebswelle des Zahnrads fest verbundenen Schnecke, durch die ein Schneckenrad antreibbar ist, wobei Schnecke und Schneckenrad eine zweite Getriebestufe und die Welle des Schneckenrads die Abtriebswelle des elektromotorischen Antriebs bilden und wobei die Abtriebswelle des elektromotorischen Antriebs zwischen einer Anfangstellung und einer Endstellung verdrehbar antreibbar ist, wobei die Abtriebswelle des Zahnrads bei unbestromtem Elektromotor von einer Rückstellfeder in Drehrichtung zur Anfangsstellung drehbar antreibbar ist, **dadurch gekennzeichnet, daß** die zweite Getriebestufe eine nichtselbsthemmende Getriebestufe ist.

2. Elektromotorischer Antrieb nach Anspruch 1, **dadurch gekennzeichnet, daß** die erste Getriebestufe ein Stirnradgetriebe ist.

3. Elektromotorischer Antrieb nach einem der vorhergehenden Ansprüche, **dadurch gekennzeichnet, daß** die Rückstellfeder eine Wendelfeder ist.

4. Elektromotorischer Antrieb nach einem der Ansprüche 1 und 2, **dadurch gekennzeichnet, daß** die Rückstellfeder eine Spiralfeder ist.

5. Elektromotorischer Antrieb nach Anspruch 4, **dadurch gekennzeichnet, daß** die Spiralfeder eine in einem Federhaus (17) mit Öffnungsspannung angeordnete Triebfeder (18) ist.

6. Elektromotorischer Antrieb nach einen der vorhergehenden Ansprüche, **dadurch gekennzeichnet, daß** die Rückstellfeder die Abtriebswelle (5) des Zahnrads (4) umschließt.

7. Elektromotorischer Antrieb nach einem der vorhergehenden Ansprüche, **dadurch gekennzeichnet, daß** die Abtriebswelle (5) des Zahnrads (4) von der Rückstellfeder um eine Mehrzahl an Umdrehungen rückstellbar ist.

8. Elektromotorischer Antrieb nach einem der vorhergehenden Ansprüche, **dadurch gekennzeichnet, daß** sich die Drehachsen des Antriebsritzels (3) des Elektromotors und der Schnecke (7) axial zueinander erstrecken.

9. Elektromotorischer Antrieb nach Anspruch 8, **dadurch gekennzeichnet, daß** die Drehachsen des Antriebsritzels (3) des Elektromotors und der Schnecke (7) parallel zueinander verlaufen.

10. Elektromotorischer Antrieb nach einem der vorhergehenden Ansprüche, **dadurch gekennzeichnet, daß** die Welle (11) des Schneckenrads (10) eine Drosselklappenwelle eines Drosselklappenstutzens für einen Verbrennungsmotor ist.

11. Elektromotorischer Antrieb nach einem der vorhergehenden Ansprüche, **dadurch gekennzeichnet, daß** der Elektromotor ein Gleichstrommotor ist.

## Claims

1. Electric motor drive having an electric motor whose drive pinion engages with a gearwheel forming a first transmission stage, having a worm which is firmly connected to the output drive shaft of the gearwheel and by means of which a worm gear can be driven, with the worm and the worm gear forming a second transmission stage and the shaft of the worm gear forming the output drive shaft of the electric motor drive, and in which case the output drive shaft of the electric motor drive can be driven such that it can rotate between an initial position and a final position, in which the output drive shaft (5) of the gearwheel (4) when no current is flowing through the electric motor can be driven such that it can be rotated by a restoring spring in the rotation direction to the initial position, **characterized in that** the second transmission stage is a non self-locking transmission stage.

2. Electric motor drive according to Claim 1, **characterized in that** the first transmission stage is a spur gear transmission.

3. Electric motor drive according to one of the preceding claims, **characterized in that** the restoring spring is a helical spring.

4. Electric motor drive according to one of Claims 1 and 2, **characterized in that** the restoring spring is a spiral spring.

5. Electric motor drive according to Claim 4, **characterized in that** the spiral spring is a drive spring (18) which is arranged in a spring housing (17) with an opening stress.

6. Electric motor drive according to one of the preceding claims, **characterized in that** the restoring spring surrounds the output drive shaft (5) of the gearwheel (4).

7. Electric motor drive according to one of the preceding claims, **characterized in that** the output drive shaft (5) of the gearwheel (4) can be moved back through two or more revolutions by the restoring spring.

8. Electric motor drive according to one of the preceding claims, **characterized in that** the rotation axes of the drive pinion (3) of the electric motor and of the worm (7) extend axially with respect to one another.

9. Electric motor drive according to Claim 8, **characterized in that** the rotation axes of the drive pinion (3) of the electric motor and of the worm (7) run parallel to one another.

10. Electric motor drive according to one of the preceding claims, **characterized in that** the shaft (11) of the worm gear (10) is a throttle valve shaft of a throttle valve connecting stub for an internal combustion engine.

11. Electric motor drive according to one of the preceding claims, **characterized in that** the electric motor is a DC motor.

## Revendications

1. Mécanisme de commande électrique comportant un moteur électrique, dont le pignon d'entraînement est en engrenage avec une roue dentée et forme un premier étage de démultiplication, et une vis sans fin, grâce à laquelle il est possible d'entraîner une roue hélicoïdale, ladite vis sans fin étant liée d'une façon fixe à l'arbre secondaire de la roue dentée, où la vis sans fin et la roue hélicoïdale forment une deuxième étage de démultiplication et où l'arbre de la roue hélicoïdale constitue l'arbre secondaire du mécanisme de commande électrique et où l'arbre secondaire du mécanisme de commande électrique peut être entraîné en rotation entre une position de départ et une position de fin de course, où l'arbre secondaire de la roue dentée peut, lorsque le moteur électrique n'est pas alimenté, être entraîné en rotation par un ressort de rappel dans le sens de rotation vers la position de départ, **caractérisé par le fait que** le deuxième étage de démultiplication est un étage démultiplicateur sans blocage automatique.

2. Mécanisme de commande électrique selon la revendication 1, **caractérisé par le fait que** le premier étage de démultiplication est un réducteur à engrenage droit.

3. Mécanisme de commande électrique selon l'une des revendications précédentes, **caractérisé par le fait que** le ressort de rappel est un ressort de renvoi.

4. Mécanisme de commande électrique selon l'une des revendications 1 et 2, **caractérisé par le fait que** le ressort de rappel est un ressort en spirale.

5. Mécanisme de commande électrique selon la revendication 4, **caractérisé par le fait que** le ressort en spirale est un ressort d'entraînement (18) placé dans un barillet (17) avec contrainte unitaire d'entrée.

6. Mécanisme de commande électrique selon l'une des revendications précédentes, **caractérisé par le fait que** le ressort de rappel entoure l'arbre secondaire (5) de la roue dentée (4).

7. Mécanisme de commande électrique selon l'une des revendications précédentes, **caractérisé par le fait que** le ressort de rappel peut ramener l'arbre secondaire (5) de la roue dentée (4) sur plusieurs tours.

8. Mécanisme de commande électrique selon l'une des revendications précédentes, **caractérisé par le fait que** l'axe de rotation du pignon d'entraînement (3) du moteur électrique et l'axe de rotation de la vis sans fin (7) ont une position axiale l'un par rapport à l'autre.

9. Mécanisme de commande électrique selon la revendication 8, **caractérisé par le fait que** l'axe de rotation du pignon d'entrainement (3) du moteur électrique et l'axe de rotation de la vis sans fin (7) sont disposés en parallèle l'un par rapport à l'autre.

10. Mécanisme de commande électrique selon l'une des revendications précédentes, **caractérisé par le fait que** l'arbre (11) de la roue hélicoïdale (10) est un arbre de papillon de régulation des gaz d'une tubulure à papillon de régulation des gaz pour moteur à combustion interne.

11. Mécanisme de commande électrique selon l'une des revendications précédentes, **caractérisé par le fait que** le moteur électrique est un moteur à courant continu.
